# EUROPÄISCHE PATENTSCHRIFT

(11) **EP 1 541 529 B1**
(45) Veröffentlichungstag und Bekanntmachung des Hinweises auf die Patenterteilung: **27.09.2006**
(21) Anmeldenummer: 04026974.8
(22) Anmeldetag: 12.11.2004
(51) Int. Cl.: C01G 49/16

(54) **Verfahren zur Herstellung von Eisenpentacarbonyl**
Method for producing iron pentacarbonyl
Procédé pour la préparation de pentacarbonyle de fer

(30) Priorität: 10.12.2003 DE 10358075
(43) Veröffentlichungstag der Anmeldung: 15.06.2005
(73) Patentinhaber: BASF Aktiengesellschaft, 67056 Ludwigshafen (DE)
(72) Erfinder: Unger, Gabriele, Dr., 1150 Brüssel (BE); Schönfelder, Hendrik, Dr., 68159 Mannheim (DE); Watzenberger, Otto, Dr., 68199 Mannheim (DE); Sterzel, Hans-Josef, Dr., 67125 Dannstadt-Schauernheim (DE); Kühling, Klaus, Dr., 67158 Ellerstadt (DE)

(56) Entgegenhaltungen:
- GB-A- 716 053
- US-A- 3 767 378

## Beschreibung

Die vorliegende Erfindung betrifft ein Verfahren zur Herstellung von Eisenpentacarbonyl.

Unter Eisencarbonyl werden im Rahmen dieser Erfindung Verbindungen aus Eisen und Kohlenmonoxid (Trivialname für Kohlenstoffmonoxid, CO) verstanden, in denen Kohlenmonoxidliganden an ein Eisenatom oder mehrere Eisenatome koordiniert sind. Das technisch wichtigste und im Rahmen dieser Erfindung bevorzugte Eisencarbonyl ist Eisenpentacarbonyl Fe(CO)₅. Eisenpentacarbonyl wird industriell als Rohstoff zur Herstellung von feinteiligem Eisenpulver (sogenanntes Carbonyleisenpulver) durch thermische Zersetzung unter Luftausschluss oder zur Herstellung von feinteiligen Eisenoxidpulvern (manche derartige Produkte werden als "Eisenrot" bezeichnet) durch Verbrennung verwendet. Die mengenmäßig bedeutsamsten Anwendungen von Carbonyleisenpulver sind die Pulvermetallurgie und die Herstellung von Magnetkemen für elektronische Bauteile, und die feinteiligen Eisenoxidpulver werden zumeist als Farb- oder Magnetpigmente verwendet. Die ebenfalls bekannten höheren Eisencarbonyle Fe₂(CO)₉ und Fe₃(CO)₁₂ entstehen zwar bei der Synthese von Eisenpentacarbonyl in geringem Umfang als Nebenprodukte, spielen in der Technik aber keine Rolle, so dass Eisenpentacarbonyl oft auch vereinfachend nur als Eisencarbonyl bezeichnet wird, und wenn nur von Eisencarbonyl die Rede ist, ist üblicherweise Eisenpentacarbonyl gemeint.

Einen allgemeinen Überblick über die Herstellung, Eigenschaften und Verwendungen von Eisencarbonyl, insbesondere Eisenpentacarbonyl, geben G. Friedrich, F. L. Ebenhöch und B. Kühborth in Ullmann's Encyclopedia of Industrial Chemistry, Sixth Edition, 2000 Electronic Release (WILEY-VCH Verlag GmbH, Weinheim), Abschnitt "3. Iron Pentacarbonyl" des Texts zum Stichwort "Iron Compounds".

Eisencarbonyl wird technisch üblicherweise durch Umsetzung von Kohlenmonoxid mit festem reaktiven Eisen, beispielsweise Eisenschwamm bei 5 bis 30 MPa Druck, typischerweise 20 MPa (200 bar), und 150 bis 200 °C hergestellt. Dazu wird Kohlenmonoxid in einem Reaktor über das Eisen geleitet, das entstehende Eisencarbonyl in einem Kühler aus dem den Reaktor verlassenden Gas abgetrennt und auf den im Aufarbeitungsteil der Anlage herrschenden Druck entspannt. Das Verfahren wird üblicherweise im Teilsatzbetrieb ("halbkontinuierlich" oder "semi-batch") durchgeführt, Eisen wird also im Reaktor vorgelegt und Kohlenmonoxid durch den Reaktor geleitet, bis das vorgelegte Eisen verbraucht ist, worauf der Reaktor geöffnet und weiteres Eisen eingefüllt wird. Je nach der genauen Zusammensetzung des verwendeten Eisens enthält das so hergestellte Eisencarbonyl Verunreinigungen durch andere flüchtige Carbonyle, beispielsweise Nickel- Chrom-, Molybdän- und/oder Wolframcarbonyle sowie sonstige Verunreinigungen, beispielsweise Schmieröl, schwefelhaltige Verbindungen oder Wasser. Das Eisencarbonyl wird üblicherweise durch ein- oder mehrfache Destillation von derartigen Verunreinigungen befreit.

Oft wird statt Eisenschwamm auch schwefelhaltiges Eisen in Form von Granalien mit einem Schwefelgehalt von beispielsweise 1 - 4 Gew.-% verwendet, wie beispielsweise in DE 634 283 C1 gelehrt, weil dieser Schwefelzusatz reaktionsbeschleunigend wirkt. Ebenso kann eine entsprechende Mischung aus schwefelfreiem und schwefelhaltigem Eisen der gewünschten Bruttozusammensetzung verwendet werden. W. Hieber und O. Geisenberger berichten in Z. Anorg. Allg. Chem. 262 (1950) 15-24, über ihre Untersuchungen dieses Effekts des Schwefels, den sie auf eine intermediäre Bildung von Eisencarbonylsulfiden und deren Disproportionierung unter Bildung von Eisencarbonyl zurückführen, und über die Bildung des Carbonylsulfids Fe₃S₂(CO)₈ aus Schwefelwasserstoff, Kohlenmonoxid und Eisen. G. Heinicke, N. Bock und H. Harenz, Z. Anorg. Allg. Chem. 372 (1970), 162-170 sowie W. Hieber und J. Gruber, Z. Anorg. Allg. Chem. 296 (1958) 91-103 diskutieren auch Fe₂S₂(CO)₆ und Fe₃S₂(CO)₉ als dabei in situ gebildete, katalytisch aktive Zwischenstufen.

Einer der größten Nachteile des technisch durchgeführten Verfahrens ist der Teilsatzbetrieb, der regelmäßiges Öffnen des Reaktors zum Nachfüllen von Eisen notwendig macht. Aufgrund der hohen Toxizität von Eisencarbonyl und des notwendigen Ausschlusses von Sauerstoff sind dabei langdauernde Spülungen des Reaktors mit Inertgas erforderlich. Diese Verfahrensführung erniedrigt die in einem Reaktor erreichbare Raumzeitausbeute erheblich und ist wirtschaftlich unbefriedigend. Es wurden daher bereits in der Vergangenheit Versuche unternommen, Eisen kontinuierlich unter den Bedingungen der Eisencarbonylsynthese in einen Reaktor eintragen zu können, wie etwa als Wirbelbettverfahren gemäß der Lehre von US 3 785 802 oder wie von C. Dofour-Berte und E. Pasero in Chim. Ind. (Milan) 49 (1967), S. 347-354 gelehrt, oder unter Vermeidung der Problematik des kontinuierlichen Eintragens von Feststoffen in Druckreaktoren eine alternative Syntheseroute ausgehend von gelösten Eisensalzen einzuschlagen, wie etwa in IT 728 074 offenbart. W. Hieber erwähnt in einem Übersichtsaufsatz in Die Chemie 55 (1942), S. 7-11 analoge Versuche zur Herstellung von Nickelcarbonyl aus Kohlenmonoxid und Nickelsulfid in alkalischer Suspension oder durch Umsetzung von Kohlenmonoxid mit Nickelsalzen organischer Thiosäuren. Keiner dieser Ansätze konnte jedoch bislang kommerziell verwertet werden, was auf insgesamt mangelnde Ausbeuten zurückzuführen sein dürfte.

Eine Möglichkeit zur Umgehung des Problems ist die Verwendung von pumpbaren Suspensionen von Eisen, die im Prinzip einfacher als Feststoffe kontinuierlich in Druckreaktoren eingebracht werden können. T. Okamura, H. Kozima und Y. Masuda berichten in Sci. Rept. Res. Inst. Tohoku Univ., Serie A, 1 (1949) 319-325 über ihre Arbeiten zur Herstellung von Eisencarbonyl mit dem gängigen Verfahren im Teilsatzbetrieb, erwähnen dabei allerdings, dass die Verwendung von Suspensionen bei ihnen in der Praxis auf Schwierigkeiten stieß. DD 17 606 offenbart dagegen ein Verfahren zur kontinuierlichen Umsetzung von Feststoffsuspensionen mit Gasen in einem mit Siebböden versehen Blasensäulenreaktor, das dort auch zur Herstellung von Eisencarbonyl aus einer Suspension von Eisenpulver in Petroleum und Kohlenmonoxid gelehrt und in einem Beispiel praktisch angewandt wird.

Aufgabe der vorliegenden Erfindung ist es, ein verbessertes Verfahren zur Herstellung von Eisenpentacarbonyl zu finden, das mit höherer Raumzeitausbeute und bei milderen Bedingungen als das technisch übliche Verfahren durchgeführt werden kann.

Dem gemäß wurde ein Verfahren zur Herstellung von Eisenpentacarbonyl durch Umsetzung von Eisen mit Kohlenmonoxid in Suspension und in Gegenwart eines schwefelhaltigen Katalysators gefunden, das dadurch gekennzeichnet ist, dass man ein Polysulfid mit der allgemeinen Formel RSₓR' als Katalysator verwendet, wobei R und R' organische Reste sind und x eine Zahl von 2 bis 8 ist.

Das erfindungsgemäße Verfahren läuft bei milderen Bedingungen ab als das gängige technische Verfahren und erlaubt höhere Raumzeitausbeuten.

Als Katalysator wird im erfindungsgemäßen Verfahren ein Polysulfid mit der allgemeinen Formel RSₓR' verwendet.

R und R' stehen unabhängig voneinander für je einen organischen Rest, wie Alkyl, Alkenyl, Alkinyl, Cycloalkyl, Cycloalkenyl, Aryl, Alkaryl oder Aralkyl. Sie können mit weiteren organischen Resten substituiert sein, Heteroatome umfassen und auch miteinander verbunden sein. Beispiele für im erfindungsgemäßen Verfahren verwendbare Reste R und R' sind lineare gesättigte Alkylreste mit einem bis 18 Kohlenstoffatomen wie Methyl, Ethyl, Propyl, Butyl, Pentyl, Hexyl, Heptyl, Octyl, Nonyl oder Decyl, gesättigte cyclische Alkylreste mit drei bis 12 Kohlenstoffatomen wie Cyclopentyl, Cyclohexyl oder Cycloheptyl, oder verzweigte gesättigte Alkylreste wie 2-Propyl, 2-Butyl, 2-Methyl-1-propyl, 1,1-Dimethylethyl oder alle verzweigten isomeren Pentyl-, Hexyl-, Heptyl-, Octyl-, Nonyl- oder Decylreste. R und R' können ebenso aromatische Reste sein, beispielsweise Phenyl oder 1- oder 2-Naphthyl. Vorzugsweise sind R und R' lineare Alkylreste, insbesondere solche mit einem bis vier Kohlenstoffatomen, insbesondere Methyl- Ethyl-, 1-Propyl- oder 1-Butylreste. In besonders bevorzugter Weise sind sowohl R als auch R' Methylreste.

Die Zahl x in der allgemeinen Formel beträgt mindestens 2, in bevorzugter Weise mindestens 2,5 und in besonders bevorzugter Weise mindestens 3 sowie höchstens 10, in bevorzugter Weise höchstens 6 und in besonders bevorzugter Weise höchstens 5. Beispielsweise beträgt x 4.

Derartige Verbindungen liegen meistens nicht als definierte Verbindungen vor. Dimethyldisulfid und Dimethyltrisulfid können als Reinsubstanzen gewonnen werden, andere derartige Verbindungen liegen jedoch stets als Gemisch verschiedener Verbindungen vor, deren Bruttozusammensetzung der gewünschten allgemeinen Formel RSxR' entspricht. Diese Formel entspricht dem Mittelwert der Formeln der im Gemisch vorhandenen Verbindungen.

Diese Verbindungen sind teilweise käuflich erhältlich, insbesondere Dimethyldisulfid, Dimethyltrisulfid und Dimethyltetrasulfid, wobei letzteres wieder ein Verbindungsgemisch ist. Alle diese Verbindungen können auch einfach nach dem bekannten Verfahren mittels Umsetzung eines Disulfids RSSR' mit elementarem Schwefel erzeugt werden. Verfahren zur Herstellung solcher Disulfide sind bekannt.

Zur Herstellung von eines Polysulfids RSₓR' wird ein Disulfid RSSR' mit elementarem Schwefel, in der Regel gelbem Schwefel S₈ an einem Katalysator umgesetzt. Als Katalysator kann jeder saure Katalysator verwendet werden, d.h., jede Substanz, die Brönstedt- oder Lewis-Acidität aufweist. Beispiele für bekannte Katalysatoren dieser Umsetzung sind saure molekulare Elementverbindungen, oxidische saure Festkörper oder saure lonentauscher wie etwa sulfonierte Polymere (beispielsweise sulfonierte Styrol- oder Styrol-Divinylbenzol-Polymere). Besonders einfach und bequem und daher bevorzugt ist die Verwendung von sauren lonentauschern. Die Umsetzung kann wahlweise ohne Lösungsmittel oder in Gegenwart eines Lösungsmittels durchgeführt werden. Wird ein Lösungsmittel verwendet, so setzt man ein gegenüber den Reaktionspartnern inertes Lösungsmittel ein. Beispiele inerter Lösungsmittel sind Kohlenwasserstoffe oder Kohlenwasserstoffgemische wie Pentan, Hexan, Cyclohexan, Benzin, Benzol, Toluol oder Xylol. Vorzugsweise wird die Umsetzung jedoch ohne Lösungsmittel durchgeführt.

Zur Durchführung der Umsetzung werden die beiden Komponenten Disulfid und elementarer Schwefel erhitzt, bis die Umsetzung beendet ist. Die eingesetzten Mengen an Disulfid und Schwefel werden so gewählt, dass gemäß der Stöchiometrie die gewünschte Zahl x in der allgemeinen Formel RSₓR' eingestellt wird. Die Temperatur bei dieser Umsetzung wird im Allgemeinen auf mindestens 20 °C, vorzugsweise mindestens 40 °C und in besonders bevorzugter Weise mindestens 80 °C sowie im Allgemeinen höchstens 150 °C, vorzugsweise höchstens 120 °C und in besonders bevorzugter Weise höchstens 110 °C eingestellt. Die typische Reaktionsdauer liegt im Allgemeinen bei mindestens 30 Minuten, in bevorzugter Weise bei mindestens 60 Minuten und in besonders bevorzugter Weise bei mindestens 90 Minuten sowie im Allgemeinen bei höchstens 6 Stunden, in bevorzugter Weise höchstens 4 Stunden und in besonders bevorzugter Weise bei höchstens 3 Stunden.

Dabei entsteht im Regelfall ein Polysulfid der allgemeinen Formel RSₓR', das ein Gemisch aus verschiedenen Polysulfiden RSₐR, R'S_{b}R' und RS_{c}R' und gelöstem Schwefel ist, wobei a, b und c Zahlen sind, die untereinander und mit dem stöchiometrischen Anteil an gelöstem Schwefel gemittelt den durch die eingesetzten Mengen Disulfid und Schwefel eingestellten Wert x ergeben.

Der Katalysator wird abfiltriert und falls ein Lösungsmittel verwendet wurde, wird dieses entfernt (beispielsweise durch Abdampfen), es sei denn, dass dieses Lösungsmittel auch in der nachfolgenden Umsetzung von Eisen mit Kohlenmonoxid als Suspensionsmittel verwendet wird, in diesem Fall ist die Entfernung nicht notwendig.

Das erfindungsgemäße Verfahren zur Herstellung von Eisenpentacarbonyl ist ein Suspensionsverfahren. Dazu wird Eisenpulver in Suspension vorgelegt und in Gegenwart des Polysulfid-Katalysators mit Kohlenmonoxid umgesetzt. Der Katalysator wird im Allgemeinen in einer Menge von mindestens 0,1 Gramm je Kilogramm zur Umsetzung mit Kohlenmonoxid eingesetzten metallischen Eisens, vorzugsweise in einer Menge von mindestens 0,5 g/kg und in besonders bevorzugter Form mindestens 1 g/kg sowie im Allgemeinen höchstens 10 g/kg, in bevorzugter Weise höchstens 8 g/kg und in besonders bevorzugter Weise höchstens 6 g/kg verwendet. Höhere Katalysatormengen sind meist unwirtschaftlich.

Zur Durchführung des erfindungsgemäßen Verfahrens wird Eisen in Form einer Suspension vorgelegt, der der Katalysator zugesetzt wird. Als Suspensionsmittel ist jedes Suspensionsmittel geeignet, das gegenüber den Reaktionspartner ausreichend inert ist. Beispiele inerter Suspensionsmittel sind Kohlenwasserstoffe oder Kohlenwasserstoffgemische wie Pentan, Hexan, Cyclohexan, Benzin, Petroleum, Benzol, Toluol oder Xylol. Ein bevorzugtes Suspensionsmittel ist Eisenpentacarbonyl.

Eisen wird in einer Form verwendet, die suspendierbar ist. Dazu sollten die Eisenpartikel nicht zu groß sein, da ansonsten eine sehr hohe Rührleistung verlangt wird. Geeignet sind beispielsweise Eisengranalien oder Eisenpulver. Eine geeignete mittlere Partikelgröße des Eisens liegt im Allgemeinen bei höchstens 10 mm, vorzugsweise höchstens 8 mm und in besonders bevorzugter Form höchstens 6 mm.

Die Suspension wird gerührt, es sei denn, dass das verwendete Eisen so feinteilig ist, dass es ausreichend wenig sedimentiert.

Diese Suspension wird mit Kohlenmonoxid versetzt, indem Kohlenmonoxiddruck aufgebaut wird. Die Umsetzung wird im Allgemeinen bei einer Temperatur von mindestens 100 °C, vorzugsweise mindestens 130 °C und in besonders bevorzugter Form mindestens 140 °C sowie im Allgemeinen höchstens 200 °C, vorzugsweise höchstens 170 °C und in besonders bevorzugter Form höchstens 160 °C durchgeführt. Eine gut geeignete Temperatur ist beispielsweise 150 °C. Der angewendete Kohlenmonoxiddruck liegt im Allgemeinen bei mindestens 5 MPa (50 bar), vorzugsweise mindestens 10 MPa (100 bar) und in besonders bevorzugter Form mindestens 12 MPa (120 bar) sowie im Allgemeinen höchstens 25 MPa (250 bar), vorzugsweise höchstens 20 MPa (200 bar) und in besonders bevorzugter Form höchstens 18 MPa (180 bar). Ein gut geeigneter Druck liegt beispielsweise bei 15 MPa (150 bar). Sofern neben Kohlenmonoxid Inertgase vorhanden, werden diese Werte als Kohlenmonoxidpartialdruck eingestellt. Die Verdünnung des Kohlenmonoxids durch Inertgase ist zwar möglich, senkt aber die erreichbare Raumzeitausbeute ab. Höhere Drücke als die oben genannten sind zwar ebenfalls möglich, bringen aber technisch keine signifikante Verbesserung.

Das Verfahren kann im Satzbetrieb (d.h., diskontinuierlich), im Teilsatzbetrieb (d.h., halbkontinuierlich) oder kontinuierlich durchgeführt werden.

Bei Satzbetrieb wird das Eisen, der Katalysator und das Suspensionsmittel vorgelegt und Kohlenmonoxid aufgepresst. Nach Beendigung der Reaktion wird entspannt, das gebildete Eisenpentacarbonyl und das Suspensionsmittel durch Filtration von festen Rückständen befreit, das Suspensionsmittel und das Eisenpentacarbonyl voneinander getrennt, beispielsweise durch Destillation und das Eisencarbonyl wie üblich aufgearbeitet. Die Trennung des Eisencarbonyls vom Suspensionsmittel erübrigt sich natürlich, wenn Eisencarbonyl als Suspensionsmittel verwendet wird.

Bei Teilsatzbetrieb wird Eisen, der Katalysator und das Suspensionsmittel vorgelegt und das System mit Kohlenmonoxid durchströmt, bis die Reaktion mangels abreagierenden Eisens zum Erliegen kommt. Der den Reaktor verlassende Gasstrom enthält neben Kohlenmonoxid das gebildete Eisenpentacarbonyl und möglicherweise auch Suspensionsmittel gemäß dessen Dampfdruck. Suspensionsmittel und Eisencarbonyl werden auskondensiert und getrennt, beispielsweise durch Destillation, und das Produkt wird wie üblich aufgearbeitet.

Das erfindungsgemäße Verfahren kann jedoch auch kontinuierlich durchgeführt werden. Dazu wird bequemerweise eine pumpbare Suspension von Eisen im Suspensionsmittel hergestellt und kontinuierlich in den Reaktor eingetragen. Der Katalysator wird entweder zu dieser Suspension gegeben oder direkt in den Reaktor eingetragen. In den Reaktor wird Kohlenmonoxid eingetragen. Die in den Reaktor eingetragenen Eisen- und Kohlenmonoxidmengen können so eingestellt werden, dass sie im Reaktorvollständig miteinander abreagieren, es kann jedoch auch Teilumsatz bezogen auf Kohlenmonoxid als auch bezogen auf Eisen eingestellt werden. Ein aus dem Reaktor abgezogener Gasstrom enthält wie der beim Teilsatzbetrieb anfallende Gasstrom Kohlenmonoxid, Eisenpentacarbonyl und Suspensionsmittel und wird wie dort aufgearbeitet. Ein aus dem Reaktor abgezogener flüssiger Strom enthält wie das beim Satzbetrieb anfallende Rohprodukt Eisenpentacarbonyl, Suspensionsmittel und nicht abreagiertes Eisen und wird wie dort aufgearbeitet.

Unumgesetztes Kohlenmonoxid und unumgesetztes Eisen können wieder von neuem eingesetzt werden.

### Beispiele

Herstellung des Katalysators

Zur Herstellung von Dimethylpolysulfid H₃C-Sₓ-CH₃ wurde gelber Schwefel und Dimethyldisulfid (bezogen von Oxford Chemicals Ltd., North Gare, Seaton Carew, Hartlepool, Großbritannien) im entsprechenden Molverhältnis mit dem lonentauscher Lewatit MP62 als Katalysator (5 g lonentauscher je Mol Schwefel) über 2 Stunden auf 90 °C erhitzt und anschließend abfiltriert. Zusätzlich wurden kommerziell erhältliches Dimethyltrisulfid und Dimethyltetrasulfid, ebenfalls von Oxford Chemicals Ltd. verwendet.

### Versuchsdurchführung

Die Reaktionen wurden in einem gerührten 300 ml-Autoklav durchgeführt, der mit 50 g Eisenpulver (Typ M 40 der Firma Höganäs AB, Höganäs, Schweden, Schwefelgehalt 0,011 Gew.-%) und 50 ml (72 g) Eisenpentacarbonyl sowie 100 mg Katalysator gefüllt wurde. Nach Verschließen des Autoklaven wurden 5 MPa (50 bar) CO aufgepresst und auf 150 °C aufgeheizt. Nach Erreichen dieser Temperatur wurden 150 bar CO aufgepresst und der Autoklav über ein automatisch gesteuertes Ventil mit einem Speichergefäß für CO (ein mit CO gefüllter Autoklav von 2,5 l Volumen unter 280 bar Anfangsdruck) verbunden. Der CO-Druck im 300 ml-Autoklav wurde konstant gehalten, indem bei einem Absinken des Drucks durch die automatische Ventilsteuerung Kohlenmonoxid aus dem Speichergefäß zugeführt wurde. Die binnen zwei Stunden nach Erreichen der Reaktionstemperatur verbrauchte CO-Menge wurde bestimmt und danach wurden der bis zu diesem Zeitpunkt erreichte Umsatz und die bis dahin erreichte Raumzeitausbeute berechnet.

Die Versuchsergebnisse der Beispiele 1-6 sind in der folgenden Tabelle zusammengefasst.

Ein Vergleichsbeispiel mit beschwefelten Eisengranalien analog dem gängigen technischen Verfahren (das jedoch nicht in einer Suspension durchgeführt wird) zeigte eine Induktionsphase von rund 5 Stunden.

| Bsp. # | Katalysator | Umsatz [Mol-%] | Raumzeitausbeute [kg Fe(CO)₅ m⁻³ h⁻¹] |
|---|---|---|---|
| 1 | H₃CS₂CH₃ (Oxford) | 24 | 304 |
| 2 | H₃CS₃CH₃ (Oxford) | 87 | 1102 |
| 3 | H₃CS₄CH₃ (Oxford) | 74 | 937 |
| 4 | H₃CS₄CH₃ | 76 | 963 |
| 5 | H₃CS₅CH₃ | 82 | 1039 |
| 6 | H₃CS₆CH₃ | 79 | 1001 |

Die Beispiele zeigen, dass mit dem erfindungsgemäßen Verfahren in erheblich schnellerer Zeit und ohne Induktionsphase hohe Umsätze und Raumzeitausbeuten erreichbar sind.

## Patentansprüche

1. Verfahren zur Herstellung von Eisenpentacarbonyl durch Umsetzung von Eisen mit Kohlenmonoxid in Suspension und in Gegenwart eines schwefelhaltigen Katalysators, **dadurch gekennzeichnet, dass** man ein Polysulfid mit der allgemeinen Formel RSₓR' als Katalysator verwendet, wobei R und R' organische Reste sind und x eine Zahl von 2 bis 10 ist.

2. Verfahren nach Anspruch 1, **dadurch gekennzeichnet, dass** R und R' gleichartige Alkylreste mit einem bis vier Kohlenstoffatomen sind.

3. Verfahren nach Anspruch 2, **dadurch gekennzeichnet, dass** R und R' Methylreste sind.

4. Verfahren nach Anspruch 1, **dadurch gekennzeichnet, dass** x eine Zahl von 2,5 bis 6 ist

5. Verfahren nach Anspruch 4, **dadurch gekennzeichnet, dass** x eine Zahl von 3 bis 5 ist.

6. Verfahren nach den Ansprüchen 1 bis 5, **dadurch gekennzeichnet, dass** man die Umsetzung bei einer Temperatur von mindestens 100 °C und höchstens 200 °C durchführt.

7. Verfahren nach Anspruch 6, **dadurch gekennzeichnet, dass** man die Umsetzung bei einem Kohlenmonoxiddruck von mindestens 5 MPa (50 bar) und höchstens 25 MPa (250 bar) durchführt.

## Claims

1. A process for preparing iron pentacarbonyl by reacting iron with carbon monoxide in suspension and in the presence of a sulfur catalyst, which comprises using a polysulfide of the general formula RSₓR' as the catalyst, where R and R' are each organic radicals and x is a number from 2 to 10.

2. The process according to claim 1, wherein R and R' are each identical alkyl radicals having from one to four carbon atoms.

3. The process according to claim 2, wherein R and R' are each methyl radicals.

4. The process according to claim 1, wherein x is a number from 2.5 to 6.

5. The process according to claim 4, wherein x is a number from 3 to 5.

6. The process according to claims 1 to 5, wherein the reaction is carried out at a temperature of at least 100°C and at most 200°C.

7. The process according to claim 6, wherein the reaction is carried out at a carbon monoxide pressure of at least 5 MPa (50 bar) and at most 25 MPa (250 bar) .

## Revendications

1. Procédé de préparation de pentacarbonyle de fer par réaction de fer avec du monoxyde de carbone en suspension et en présence d'un catalyseur contenant du soufre, **caractérisé en ce que**, comme catalyseur, on utilise un polysulfure présentant la formule générale RSₓR', où R et R' sont des radicaux organiques et x est un nombre de 2 à 10.

2. Procédé suivant la revendication 1, **caractérisé en ce que** R et R' sont des radicaux identiques présentant 1 à 4 atomes de carbone.

3. Procédé suivant la revendication 2, **caractérisé en ce que** R et R' sont des radicaux méthyle.

4. Procédé suivant la revendication 1, **caractérisé en ce que** x est un nombre de 2,5 à 6.

5. Procédé suivant la revendication 4, **caractérisé en ce que** x est un nombre de 3 à 5.

6. Procédé suivant les revendications 1 à 5, **caractérisé en ce qu'**on effectue la réaction à une température d'au moins 100°C et d'au plus 200°C.

7. Procédé suivant la revendication 6, **caractérisé en ce qu'**on effectue la réaction à une pression de monoxyde de carbone d'au moins 5 MPa (50 bars) et d'au plus 25 MPa (250 bars).
